Europäisches Patentamt

European Patent Office

Office européen des brevets

(11) Publication number: **0 399 745**
**A2**

## EUROPEAN PATENT APPLICATION

(21) Application number: **90305457.5**

(22) Date of filing: **21.05.90**

(51) Int. Cl.5: **G01N 35/00, B01J 19/00**

(30) Priority: **23.05.89 JP 129740/89**

(43) Date of publication of application:
**28.11.90 Bulletin 90/48**

(84) Designated Contracting States:
**CH DE FR GB LI**

(71) Applicant: **SEIKO INSTRUMENTS INC.**
**31-1, Kameido 6-chome Koto-ku**
**Tokyo 136(JP)**

(72) Inventor: **Uchida, Toyoaki**
**31-1, Kameido, 6-chome**
**Koto-ku, Tokyo(JP)**

(74) Representative: **Miller, Joseph et al**
**J. MILLER & CO. Lincoln House 296-302 High**
**Holborn**
**London WC1V 7JH(GB)**

(54) **Reaction chamber.**

(57) A reaction chamber comprising a reaction vessel (2) having a reaction space (6); fluid inlet and outlet means (7,8) for respectively introducing fluid into and withdrawing it from the reaction space (6); and a sample carrier (3) which is disposed in the reaction space (6) characterised in that the reaction vessel (2) is made of non-magnetic material and the sample carrier (3) is made at least in part of magnetic material, there being magnetic means (4) for floating the sample carrier (3) in the reaction space (6).

# FIG. 1

## REACTION CHAMBER

The present invention relates to a reaction chamber and, although it is not so restricted, it relates more particularly to a reaction chamber for carrying out reactions which sequentially produce 2-anilino-5-thiazolinone amino acid derivatives in ananalyzer which automates amino-terminal sequence analysis of protein or peptide.

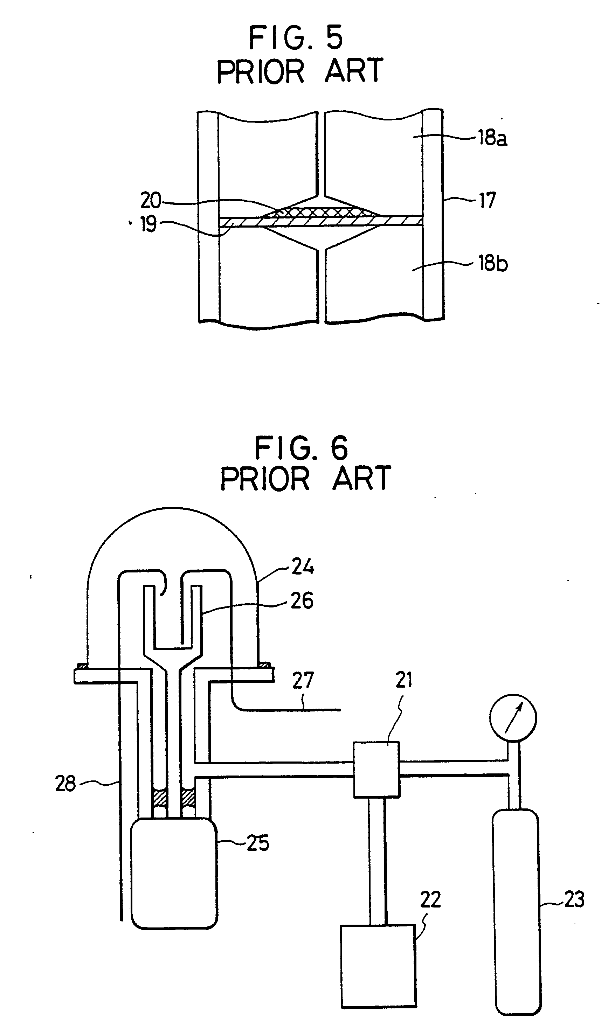

Figures 5 and 6 show two different known reaction chambers for carrying out reactions which sequentially produce thiazolinone amino acid derivatives based on the Edman reaction.

The reaction chamber of Figure 5 is so constructed that a sample is in operation adsorbed in a glass filter 20 which is mounted on a membrane filter 19 sandwiched between a pair of glass blocks 18a and 18b within a frame 17. Reagent or solvent is applied to the sample through a flow path in the centre of the glass blocks 18a, 18b according to the procedure adopted in the Edman reaction.

The reaction chamber shown in Figure 6 comprises a reaction chamber 24 connected to a vacuum pump 22 and to a nitrogen gas bottle 23 through a three-way switch valve 21 so that the reaction chamber may be subjected to vacuum or may be filled with nitrogen gas. The reaction chamber 24 contains a glass cup 26 rotatable by a motor 25, a supply line 27 for delivering to the glass cup 26 the reagent and the solvent needed for the reaction, and a discharge line 28 for removing the reagent and the solvent.

However, with regard to the reaction chamber of Figure 5, the sample is supported between the glass fibres of the glass filter 20 and therefore the reagent or solvent cannot be efficiently distributed throughout the sample. Hence the efficiency of the reaction is impaired. Consequently, repetitive yield in the sequence analysis is reduced. Such a tendency becomes marked in the case of treating a micro amount of a sample so that analysis may not be possible. Further, various kinds of reagents and solvents are supplied through a common flow path to the protein sample for the reaction. Therefore, these reagents may be contaminated with each other.

With regard to the reaction chamber of Figure 6, means for rotating the glass cup 26 must be provided in the vacuum chamber. Consequently, the maintenance of the analyzer is complicated. In particular, when the glass cup 26 has small dimensions for treating a micro amount of the sample, it is difficult to maintain stable rotation of such a small glass cup.

According, therefore, to the present invention, there is provided a reaction chamber comprising a reaction vessel having a reaction space; fluid inlet and outlet means for respectively introducing fluid into and withdrawing it from the reaction space; and a sample carrier which is disposed in the reaction space characterised in that the reaction vessel is made of non-magnetic material and the sample carrier is made at least in part of magnetic material, there being magnetic means for floating the sample carrier in the reaction space.

Preferably, the magnetic means are operable to move the sample carrier within the reaction space, sensor means being provided for detecting the position of the sample carrier.

The magnetic means may, for example, be operable to move the sample carrier in a substantially vertical direction.

The magnetic means are preferably disposed in the reaction vessel.

The sample carrier may have an internal portion formed of magnetic material and an external portion for supporting the sample.

The external portion may be formed of a material selected from glass, ceramics and polymers.

Preferably the material of the external portion is polyvinylidene difluoride or polymethyltrifluoropropylsiloxane.

The sample carrier may have a spherical or spheroidic shape.

The reaction vessel may have a plurality of separate parts which are coupled together to define the reaction space.

Means may be provided for preventing a surface of the sample carrier from contacting an internal wall of the reaction vessel which defines the reaction space.

The invention also comprises a method of carrying out a reaction on a sample comprising supporting the sample by means of a sample carrier disposed in a reaction space in a reaction vessel, and introducing into the reaction space at least one reagent which reacts with the sample characterised in that the reaction is effected while the sample carrier is magnetically floated within the reaction space.

In such a reaction chamber, a sample of protein or peptide may be uniformly distributed on the surface of the sample carrier in the reaction space, and the sample carrier may be floated and held to shift in the vertical direction so as to increase the reaction efficiency between the sample and the reagent or solvent.

The invention is illustrated, merely by way of example, in the accompanying drawings, in which:-

Figure 1 is a sectional view of a reaction chamber according to the present invetnion;

Figure 2 is a control block diagram of components employed in the reaction chamber of Figure 1;

Figure 3 is a sectional view of a sample carrier which may be used in the reaction chamber according to the present invention;

Figure 4 shows a separation pattern of a standard mixture of phenylthiocarbamyl amino acid derivatives; and

Figures 5 and 6 are sectional views of known reaction chambers.

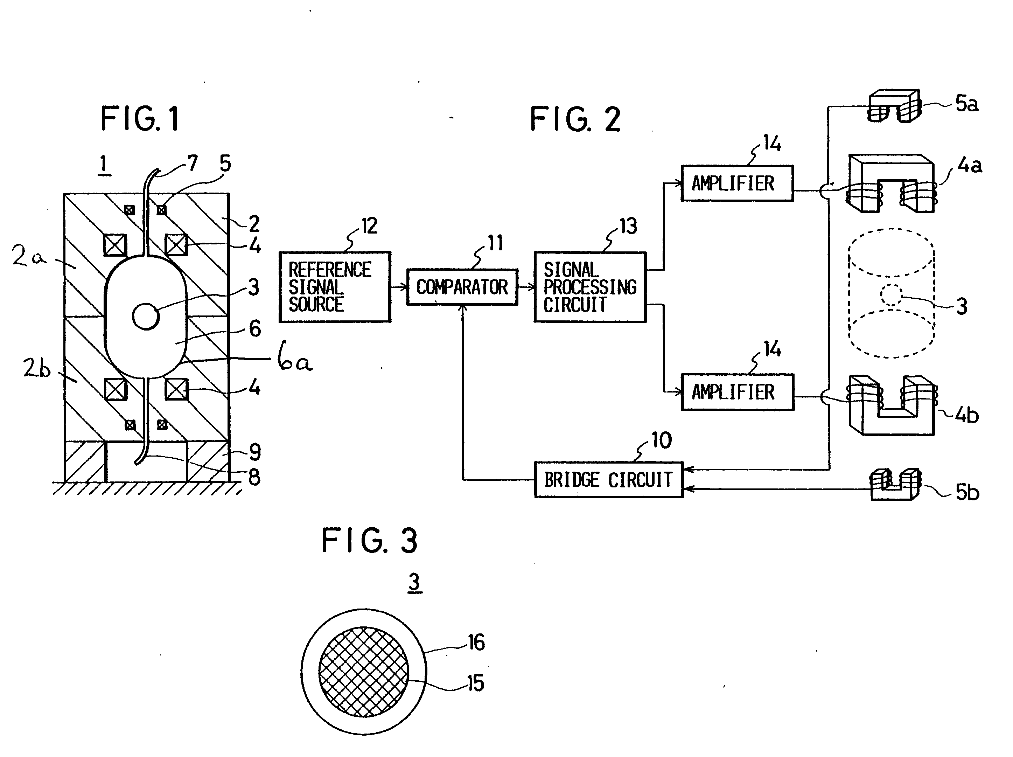

In Figure 1 there is shown a reaction chamber according to the present invention adapted for floating and holding a sample carrier. In the reaction chamber 1 shown in Figure 1, a reaction vessel 2 is provided therein with an internal wall 6a which defines a reaction space 6. Within the reaction space 6 there is a sample carrier 3 which is adapted to carry a protein sample. The sample carrier 3 is formed at least in part of magnetic material and is floated and held inside the vessel 2 which is made of non-magnetic material. This floating and holding is effected by magnetic force generated by electromagnets 4 (magnetic means), and the position of the sample carrier 3 is monitored by position sensors 5.

The electromagnets 4 are disposed within the walls of the reaction vessel 2, the latter being divided into upper and lower parts 2a, 2b which are coupled to define the reaction space 6 to contain therein the sample carrier 3.

Further, the reaction vessel 2 is provided with an upper fluid path, or fluid inlet means 7 and a lower fluid path or fluid outlet means 8 so as to charge and discharge reagent and solvent needed for the reactions into and from the reaction space 6. The reaction vessel 2 is supported by a retainer or support 9.

A description is now given with reference to Figure 2 as to how to control the floating and holding of the sample carrier 3 in the vertical axis by means of the electromagnets 4 and the position sensors 5. Firstly, a position sensor 5a detects a distance $G_1$ between an electromagnet 4a and the sample carrier 3 which is floated by the magnetic force generated by the electromagnet 4a and by another electromagnet 4b. Another position sensor 5b detects a distance $G_2$ between an electromagnet 4b and the sample carrier 3.

In order to hold the sample carrier 3 at a mid-point between the electromagnets 4a and 4b, a bridge circuit 10 processes a pair of detection signals representative of the detected distances $G_1$ and $G_2$, and then a comparator 11 compares the processed signal with a reference signal from a reference signal source 12. Moreover, a signal processing circuit 13 calculates appropriate values of the electric currents which need to be supplied, via a respective amplifier 14, to the electromagnets 4a and 4b based on the compared results. Each amplifier 14 amplifies the electric current to the respective electromagnet according to the calculated values so as to control the magnitude of the magnetic forces generated from the electromagnets 4a and 4b to thereby equalize the distances $G_1$ and $G_2$ with each other. Further, when the sample carrier 3 is to be displaced upwards or downwards in the vertical direction, the signal processing circuit 13 operates to calculate appropriate current values effective to enable the electromagnets 4a and 4b to adjust the distances $G_1$ and $G_2$ through the amplifiers 14. The signal processing circuit 13 is moreover operable to prevent a surface of the sample carrier 3 from contacting the internal wall 6a of the reaction vessel 2 which defines the reaction space 6.

In the reaction space 6, applied reagents and solvents can be efficiently reacted with the sample on the sample carrier 3.

A description is now given as to how to sequentially produce thiazolinone amino acid derivatives from a protein sample carried on the sample carrier 3 and as to how to detect the derivatives.

As shown in Figure 3, the sample carrier 3 may be comprised of a spherical or other ferrite core or internal portion 15 and a glass or other coating or external portion 16 formed thereon as a sample supporting material. In such construction, the ferrite core 15 may be of spherical, cubic, cylindrical, spheroidic or other shape.

The sample supporting material coated on the surface of the ferrite core 15 may be composed of glass, ceramics or polymeric material such as polyvinylidenedifluoride and polymethyltrifluoropropylsiloxane.

The following procedure, which is based on the ordinary automated gas-phase Edman method, may be adopted. The sample carrier 3, which may be of 5mm diameter, is treated with polybrene (hexadimethrin bromide) and then is applied with $5\mu l$ or 70% formic acid containing 1 pico (pico : $10^{-12}$) mole of myoglobin, and thereafter the protein sample is dried. Subsequently, coupling reagent, buffer vapour, washing solvent, cleavage reagent and extraction solvent is delivered to the reaction chamber according to an analysis program (Table 1) of a commercially available automated gas-phase sequence analyzer. Sequentially obtained thiazolinone amino acid derivatives are detected according to the fluorescence analysis using 4-amino fluorescein. Namely, $75\mu l$ of methanol containing 1% of pyridine and $25\mu l$ of methanol containing 30 pico mole of 4-amino fluorescein are successively added to $150\mu l$ of butyl chloride containing thiazolinone amino acid derivatives, and the mixture is dried. next, $25\mu l$ of methanol containing

3

EP 0 399 745 A2

30 pico mole of 4-amino fluorescein is added again, and the mixture is dried after 10 minutes of standing. This dried sample is dissolved by 50μl of methanol. A 25μl portion of the solution is employed for analysis using a liquid chromatograph and fluorophotometric detector. The analysis conditions are shown in Table 2.

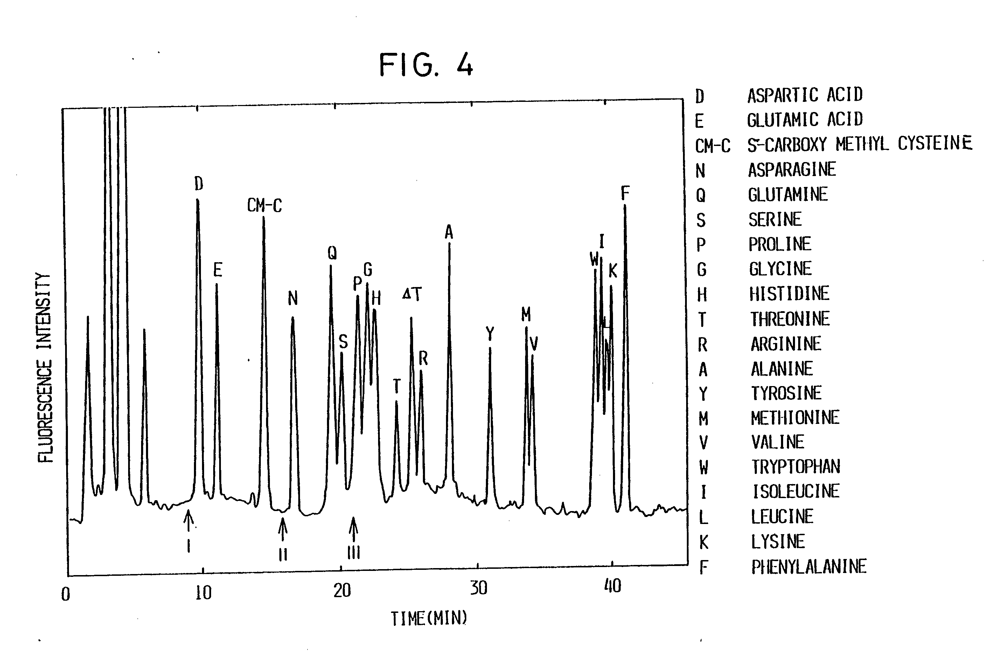

Figure 4 shows the separation pattern of the standard mixture of 20 kinds of phenylthiocarbamyl amino acid derivatives obtained by the above described procedure. The amount of the respective derivatives is of the order of 10 to 15 femto (femto : $10^{-15}$) mole. All of the derivatives can be separated and identified.

TABLE 1

| Cycle length : 32 steps | | | |
| Runtime : 43 mins 32 secs | | | |
| Step | Function | Value | Elapsed Time |
| --- | --- | --- | --- |
| 1 | Prep R2 | 6 | 0 min 6 sec |
| 2 | Deliver R2 | 20 | 0 min 26 sec |
| 3 | Prep R1 | 6 | 0 min 32 sec |
| 4 | Deliver R1 | 2 | 0 min 34 sec |
| 5 | Argon Dry | 40 | 1 min 14 sec |
| 6 | Deliver R2 | 400 | 7 min 54 sec |
| 7 | Prep R1 | 6 | 8 min 0 sec |
| 8 | Deliver R1 | 2 | 8 min 2 sec |
| 9 | Argon Dry | 40 | 8 min 42 sec |
| 10 | Deliver R2 | 400 | 15 min 22 sec |
| 11 | Prep R1 | 6 | 15 min 28 sec |
| 12 | Deliver R1 | 2 | 15 min 30 sec |
| 13 | Argon Dry | 40 | 16 min 10 sec |
| 14 | Deliver R2 | 400 | 22 min 50 sec |
| 15 | Argon Dry | 120 | 24 min 50 sec |
| 16 | Deliver S1 | 60 | 25 min 50 sec |
| 17 | Deliver S2 | 200 | 29 min 10 sec |
| 18 | Argon Dry | 120 | 31 min 10 sec |
| 19 | Load R3 | 4 | 31 min 14 sec |
| 20 | Argon Dry | 4 | 31 min 18 sec |
| 21 | Pause | 300 | 36 min 18 sec |
| 22 | Load S2 | 6 | 36 min 24 sec |
| 23 | Block Flush | 6 | 36 min 30 sec |
| 24 | Argon Dry | 120 | 38 min 30 sec |
| 25 | Prep Transfer | 30 | 29 min 0 sec |
| 26 | Deliver S1 | 9 | 39 min 9 sec |
| 27 | Transfer w/S3 | 52 | 40 min 1 sec |
| 28 | Pause | 20 | 40 min 21 sec |
| 29 | Transfer w/Argon | 40 | 41 min 1 sec |
| 30 | End Transfer | 1 | 41 min 2 sec |
| 31 | Deliver S3 | 30 | 41 min 32 sec |
| 32 | Argon Dry | 120 | 43 min 32 sec |
| (Extracted from 477 A type manual of Applied Biosystems Inc., Ltd.) | | | |
| R1 : 5% phenylisothiocyanate/heptane | | | |
| R2 : 12.5% trimethylamine/water | | | |
| R3 : trifluoroacetic acid | | | |
| S1 : n-heptane | | | |
| S2 : ethyl acetate | | | |
| S3 : butyl chloride | | | |

4

# EP 0 399 745 A2

## TABLE 2

### ANALYSIS CONDITIONS FOR LIQUID CHROMATOGAPH

Column : Capcell Pack (AG) C18 produced by Shiseido
Co., Ltd.          $\phi$ 4.6mm x 150mm

Column temperature : 43°

Detector : spectrofluorophotometer RF-540 produced
by Shimazu Seisakusho Co., Ltd.

Excitation wavelength : 494mm

Emission wavelength : 513mm

Pump : Waters 600E system

Flow rate : total 0.8m/min

Gradient program : (A) 10mM sodium phosphate buffer
(B) methanol
(C) acetonitrile

| time(min) | (A)  % | (B)  % | (C)  % |
|-----------|--------|--------|--------|
| 0.0       | 79     | 20     | 1      |
| 0.1       | 75     | 23     | 2      |
| 14.0      | 75     | 23     | 2      |
| 19.0      | 71     | 19     | 12     |
| 34.0      | 71     | 12     | 19     |
| 40.0      | 50     | 25     | 25     |
| 45.0      | 79     | 20     | 1      |
| 65.0      | 79     | 20     | 1      |

In the reaction chamber described above, the sample carrier 3 is floated and positioned in the reaction space 6 so that reagents and solvents can be efficiently and uniformly applied to the sample, and so that cross contamination of the used reagents and solvents can be avoided as much as possible.

The reaction efficiency of repeated production of thiazolinone amino-acid derivatives is increased so as to increase the number of identified amino acids, thereby enabling microanalysis of the sample.

## Claims

1. A reaction chamber comprising a reaction vessel (2) having a reaction space (6); fluid inlet and outlet means (7,8) for respectively introducing fluid into and withdrawing it from the reaction space (6); and a sample carrier (3) which is disposed in the reaction space (6) characterised in that the reaction vessel (2) is made of non-magnetic material and the sample carrier (3) is made at least in part of magnetic material, there being magnetic means (4) for floating the sample carrier (3) in the reaction space (6).

2. A reaction chamber as claimed in claim 1 characterised in that the magnetic means (4) are operable to move the sample carrier (3) within the reaction space (6}, sensor means (5) being provided for detecting the position of the sample carrier (3).

3. A reaction chamber as claimed in claim 2 characterised in that the magnetic means (4) are operable to move the sample carrier (3) in a substantially vertical direction.

4. A reaction chamber as claimed in any preceding claim characterised in that the magnetic means (4) are disposed in the reaction vessel (2).

5. A reaction chamber as claimed in any preceding claim characterised in that the sample carrier (3) has an internal portion (15) formed of magnetic material and an external portion (16) for supporting the sample.

6. A reaction chamber as claimed in claim 5 characterised in that the external portion (16) is formed of a material selected from glass, ceramics and polymers.

7. A reaction chamber as claimed in claim 6 characterised in that the material of the external portion (16) is polyvinylidene difluoride or polymethyltrifluoropropylsiloxane.

8. A reaction chamber as claimed in any preceding claim characterised in that the sample carrier (3) has a spherical or spheroidic shape.

9. A reaction chamber as claimed in any preceding claim characterised in that the reaction vessel (2) has a plurality of separate parts (2a,2b) which are coupled together to define the reaction space (6).

10. A reaction chamber as claimed in any preceding claim characterised by means (13) for preventing a surface of the sample carrier (3) from contacting an internal wall (6a) of the reaction vessel (2) which defines the reaction space (6).

11. A method of carrying out a reaction on a sample comprising supporting the sample by means of a sample carrier (3) disposed in a reaction space (6) in a reaction vessel (2), and introducing into the reaction space (6) at least one reagent which reacts with the sample characterised in that the reaction is effected while the sample carrier (3) is magnetically floated within the reaction space (6).

12. A reaction chamber comprising: a reaction vessel (2) composed of non-magnetic material for defining a reaction space (6) and having inlet (7) and outlet (8) for charging and discharging fluid; a sample carrier (3) disposed in the reaction space (6); magnetic means (4) disposed inside the reaction vessel (2) for generating magnetic force effective to float the sample carrier (3) to move the same; and a sensor (5) for detecting the position of the sample carrier (3).

# FIG. 1

# FIG. 2

REFERENCE SIGNAL SOURCE

COMPARATOR

SIGNAL PROCESSING CIRCUIT

AMPLIFIER

AMPLIFIER

BRIDGE CIRCUIT

# FIG. 3

EP 0 399 745 A2

# FIG. 4

| | |
|---|---|
| D | ASPARTIC ACID |
| E | GLUTAMIC ACID |
| CM-C | S-CARBOXY METHYL CYSTEINE |
| N | ASPARAGINE |
| Q | GLUTAMINE |
| S | SERINE |
| P | PROLINE |
| G | GLYCINE |
| H | HISTIDINE |
| T | THREONINE |
| R | ARGININE |
| A | ALANINE |
| Y | TYROSINE |
| M | METHIONINE |
| V | VALINE |
| W | TRYPTOPHAN |
| I | ISOLEUCINE |
| L | LEUCINE |
| K | LYSINE |
| F | PHENYLALANINE |

EP 0 399 745 A2

EP 0 399 745 A2

# FIG. 5
## PRIOR ART

18a
20
17
19
18b

# FIG. 6
## PRIOR ART

24
26
27
21
28
25
22
23